(19) Europäisches Patentamt
European Patent Office
Office européen des brevets

(11) **EP 2 605 919 B1**

(12) **EUROPÄISCHE PATENTSCHRIFT**

(45) Veröffentlichungstag und Bekanntmachung des Hinweises auf die Patenterteilung:
**10.09.2014 Patentblatt 2014/37**

(21) Anmeldenummer: **11734017.4**

(22) Anmeldetag: **15.07.2011**

(51) Int Cl.:
*B60B 3/10* (2006.01)      *B60B 7/00* (2006.01)
*B60B 7/04* (2006.01)      *B60B 7/06* (2006.01)
*B60B 19/10* (2006.01)      *F16D 65/847* (2006.01)
*F16D 65/78* (2006.01)

(86) Internationale Anmeldenummer:
**PCT/EP2011/003527**

(87) Internationale Veröffentlichungsnummer:
**WO 2012/022401 (23.02.2012 Gazette 2012/08)**

(54) **FAHRZEUGRAD**

VEHICLE WHEEL

ROUE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.08.2010 DE 102010034417**

(43) Veröffentlichungstag der Anmeldung:
**26.06.2013 Patentblatt 2013/26**

(73) Patentinhaber: **Audi AG**
**85045 Ingolstadt (DE)**

(72) Erfinder:
• **MEITINGER, Karl-Heinz**
**81667 München (DE)**

• **KOSSIRA, Christoph**
**85053 Ingolstadt (DE)**
• **SCHMID, Wolfgang**
**85354 Freising (DE)**

(74) Vertreter: **Engelhardt, Harald**
**AUDI AG**
**Patentabteilung**
**85045 Ingolstadt (DE)**

(56) Entgegenhaltungen:
**EP-A2- 0 145 487      EP-A2- 1 319 526**
**DE-A1- 3 816 415      DE-A1-102008 007 690**
**JP-A- 61 244 601**

**Beschreibung**

Die Erfindung betrifft ein Fahrzeugrad, umfassend eine Felge, einen an dieser befestigten Bremstopf und eine am Bremstopf befestigte Bremsscheibe, wobei an der Felge mehrere schwenkbar gelagerte, vorzugsweise plattenförmige Abdeckelemente zum temporären Verschließen zugeordneter felgenseitiger Durchbrechungen vorgesehen sind, die über wenigstens ein thermisch gesteuertes Stellelemente von einer Schließstellung in eine Offenstellung bringbar sind.

Die Konzeption moderner Felgen unterliegt unterschiedlichen, einander teilweise entgegenlaufenden Anforderungen. Neben einer eine einfache Herstellung ermöglichenden einfachen Felgenkontur ist eine zentrale Forderung, dass die Felge eine möglichst hohe Luftdurchströmung ermöglicht, um im Bremsfall die Bremsscheibe optimal über den Luftstrom kühlen zu können. Ferner muss beim Nachheizen der Bremsscheibe im Stand dafür gesorgt werden, dass die Wärme auch ohne Luftströmung abtransportiert werden kann. Das heißt, dass hieraus die Forderung nach einer möglichst "offenen" Felgenstruktur resultiert.

Aus aerodynamischen Gründen jedoch sollte die Felge möglichst geschlossen sein, um Luftverwirbelungen, die durch die Felgendurchbrüche entstehen, möglichst zu verhindern. Im normalen Fahrbetrieb herrscht im Bereich des Unterbodens des Fahrzeugs ein Überdruck, der dafür sorgt, dass Luft durch die Freiräume der Felge gedrückt wird. Würde die Felge als geschlossene Scheibe ausgeführt, so könnte der Cw-Wert, der als Faktor in die Berechnung des Luftwiderstands des Fahrzeugs eingeht, verbessert werden.

Um diesen einerseits aus thermischen, andererseits aus aerodynamischen Gründen einander quasi widersprechenden Anforderungen gerecht zu werden, ist es bekannt, durch Verwendung beweglicher, üblicherweise schwenkbar gelagerter plattenförmiger Abdeckelemente die felgenseitigen Durchbrechungen bedarfsabhängig öffnen und schließen zu können. Bei solchen Systemen sind die plattenförmigen Abdeckelemente zumeist schwenkgelagert und beispielsweise längs der Schwenkachse radial beweglich. Zur Felge hin sind die Abdeckelemente zusätzlich über ein zwangsführendes Koppelelement verbunden. Mit zunehmender Raddrehzahl nimmt die auf die Abdeckelemente wirkende Fliehkraft immer stärker zu, was dazu führt, dass sie, ausgehend von einer radial innenliegenden Stellung, in der sie die jeweils zugeordnete Durchbrechung öffnen, radial nach außen wandern, wobei während dieser fliehkraftbedingten Radialbewegung infolge der Zwangsführung über das Koppelelement die Abdeckelemente von der Offenstellung in die Schließstellung übergehen. Diese radiale Bewegung erfolgt gegen die Kraft eines Rückstellelements, üblicherweise einer Feder, die das jeweilige Abdeckelement wieder radial nach innen drängt, jedoch aufgrund der hohen Fliehkräfte überdrückt wird. Nimmt die Raddrehzahl wieder ab, ist die Bewegung umgekehrt, die Abdeckelemente öffnen infolge der radial nach innen erfolgenden Bewegung mit abnehmender Fliehkraft über das zwangsführende Koppelelement automatisch, wenn sie in ihre innenliegende Stellung übergehen.

Um dann, wenn trotz höherer Fahrgeschwindigkeit und radial nach außen bewegten, also geschlossenen Abdeckelementen die Temperatur im Radinneren, also im Bereich der Bremse, hinreichend hoch ist, so dass eine Kühlung unbedingt erforderlich ist, diese über einen Luftstrom durch die Felge zu ermöglichen, ist bei dem beispielsweise aus EP 0 145 487 A2 bekannten Mechanismus ein temperaturgesteuertes Stellelement beispielsweise in Form einer Formgedächtnislegierung oder eines thermischen Bimetalls vorgesehen, das sich bei Erreichen einer hinreichend hohen Stelltemperatur verformt und verformungsbedingt eine Kraft auf das zugeordnete Abdeckelement aufbringt, um dieses von der radial außenliegenden Stellung zurück in die radial innenliegende Offenstellung zu drücken. Hierbei ist jedoch die hohe Flieh- oder Zentripetalkraft zu überdrücken, um das Abdeckelement über das zwangsführende Koppelelement wieder zurückzudrücken. Dies setzt hohe Anforderungen an das jeweilige thermisch gesteuerte Stellelement, das folglich das entsprechende Arbeitsvermögen aufweisen muss.

Grundsätzlich ergeben sich aus den eingangs erwähnten Anforderungen an ein "aktives" Fahrzeugrad mehrere unterscheidbare Zustände. Im Fahrzeugstillstand sind die plattenförmigen Abdeckelemente geöffnet. Dadurch wird zum einen ein häufig aus Gründen des Designs gewünschter 3D-Effekt (Tiefeneffekt) erzeugt, zum anderen kann, wenn die Bremsscheibe aufgrund einer vorherigen Fahrt nachheizt, die Abwärme durch die Felge abgeleitet werden. Ab einer bestimmten Fahrzeuggeschwindigkeit, z. B. 30 - 40 km/h, ist das Design des Rades für das menschliche Auge nicht mehr zu differenzieren, man sieht lediglich noch eine rotierende Scheibe. Ab dieser Grenzgeschwindigkeit sollten die Abdeckelemente schließen, um die Aerodynamik zu verbessern. Wird hingegen die Betriebsbremse während der Fahrt betätigt, und wärmt sich die Bremsscheibe auf, sind die Abdeckelemente wieder zu öffnen, um die Belüftung der Bremsanlage zu gewährleisten. Es ergeben sich also folgende Zustandsänderungen bezüglich des Abdeckelements:

Abdeckelemente geöffnet → Abdeckelemente geschlossen, wenn:

$$v > v_{grenz} \text{ und } T < T_{grenz}$$
.

Abdeckelemente geschlossen → Abdeckelemente geöffnet, wenn:

$$v < v_{grenz} \text{ oder } T > T_{grenz}$$

Dabei bedeutet v die Istgeschwindigkeit, $v_{grenz}$ die zuvor beschriebene Grenzgeschwindigkeit, T die Isttemperatur im Bereich der Fahrzeugbremse, sowie $T_{grenz}$ eine Grenztemperatur, ab welcher die Abdeckelemente zu öffnen sind.

Wie eingangs beschrieben, dient das thermisch gesteuerte Stellelement dazu, die Kraft zu erzeugen, die zum Öffnen der Abdeckelemente, die bei Drehung des Fahrzeugrads die Schließstellung eingenommen haben, erforderlich ist, um sie in die ausgeschwenkte Offenstellung zu bewegen. Im Stand der Technik werden hierzu thermische Bimetalle oder Formgedächtnislegierungen verwendet. Diese thermischen Arbeitselemente sensieren die Temperatur im Radraum und wandeln die thermische Energie im Radraum in Arbeit um, die genutzt wird, um die Abdeckelemente zu öffnen.

Nachteilig hieran ist, dass die übertragene Wärme, die im Radraum abgestrahlt wird, mitunter nicht reicht, um die thermisch gesteuerten Stellelemente mit ausreichend Energie zu versorgen, diese also zu erwärmen. Die thermische Kopplung ist also nicht ausreichend, um einen hinreichenden Wärmeübertrag sicherzustellen. Ferner können Umwelteinflüsse wie z. B. Regen oder Schnee die Abtastung der Temperaturänderung und den thermischen Energieübertrag im Radraum stören. Ferner ist bei bekannten thermisch gesteuerten Stellelementen auf Basis thermischer Bimetalle oder Formgedächtnislegierungen mitunter nur ein relativ kurzer Hub und eine gegebenenfalls nicht ausreichend hohe Stellkraft erzeugbar, was den Einsatz solcher Stellelemente beispielsweise bei Fahrzeugrädern mit fliehkraftbedingt sich radial aus einer inneren Offenstellung in die äußere Schließstellung bewegenden Abdeckelementen nicht zulässt, da bei solchen Fahrzeugradausgestaltungen beachtlich hohe Kräfte erzeugt werden müssen, um bei gegebener Radrotation und herrschenden Fliehkräften dennoch die Abdeckelemente in die Offenstellung drücken zu können.

Aus der gattungsbildenden DE 38 16 415 A1 ist ein Fahrzeugrad umfassend eine Bremse mit einer Luftzufuhreinrichtung bekannt. An der innenliegenden Felgenstirnseite des Rades ist eine Tragscheibe an einem Achsteil drehfest angebracht. Dabei hat die Tragscheibe mindestens eine Ausnehmung, an deren dem Achsteil benachbarten Rand ein Luftleitteil angelenkt ist. Dieses kann durch einen Druckmittel beaufschlagten Stellmotor oder ein schraubenfederartiges Stellelement von seiner Schließstellung in seine Wirkstellung aufgeschwenkt werden, wobei hierbei ein in Fahrtrichtung offener Lufteinströmkanal gebildet wird. Durch diesen kann bedarfsweise auf die Reibscheibe zu deren Kühlung eine entsprechende Luftmenge einströmen.

Aus EP 1 319 526 A2 ist ferner ein Fahrzeugrad bekannt, umfassend eine Felge mit Felgenbett zur Aufnahme eines Reifens oder zur Ausbildung einer Lauffläche, sowie mit mehreren zwischen dem Nabenabschnitt der Felge und dem Felgenbett über deren Umfang verteilt angeordneten Tragelementen wie Speichen oder Stegen, zwischen denen Durchbrüche oder Zwischenräume vorgesehen sind. Wenigstens einer dieser Durchbrüche oder Zwischenräume ist zumindest teilweise abdeck- oder verschließbar, während sich das mit diesem Fahrzeugrad oder dieser Felge ausgerüstete Fahrzeug bewegt, oder der Durchbruch oder Zwischenraum ist freilegbar, wenn sie das Rad oder die Felge bewegt. Zum Verschließen ist ein entsprechendes Abdeckelement vorgesehen, das mittels eines Aktuators in die jeweils gewünschte Position bewegt werden kann.

Weiterhin ist aus DE 10 2008 007 690 A1 eine Felge oder ein Rad für eine Kraftfahrzeug bekannt, welche Felge respektive welches Rad ebenfalls Öffnungen aufweist, die über Verschlusselemente, die über entsprechende Stelleinrichtungen bewegt werden können, bedarfsweise geöffnet und verschlossen werden können.

Schließlich ist aus JP 61 244601 A ein Fahrzeugrad bekannt, mit einer Felge, die ebenfalls mehrere Durchbrechungen aufweist, die bedarfsabhängig über etnsprechende Verschlusselemente geöffnet respektive geschlossen werden können, um einen Luftdurchtritt zu ermöglichen.

Der Erfindung liegt damit das Problem zugrunde, ein Fahrzeugrad anzugeben, bei dem einerseits eine gute Erfassung der radraumseitigen Temperaturänderung möglich ist, und andererseits ein Stellelement mit hinreichendem Hub respektiver hinreichender Krafterzeugung eingesetzt wird.

Zur Lösung dieses Problems ist bei einem Fahrzeugrad der eingangs genannten Art erfindungsgemäß vorgesehen, dass das Stellelement ein Dehnstoffarbeitselement ist, das zur Ermöglichung eines Wärmeübergangs von der Bremsscheibe auf das Stellelement mit der Bremsscheibe thermisch gekoppelt ist.

Die Erfindung zeichnet sich zum einen dadurch aus, dass als Stellelement ein Dehnstoffarbeitselement verwendet wird. Ein solches Dehnstoffarbeitselement arbeitet nach dem sogenannten Dehnstoff-Hochdruck-Prinzip. In einem Gehäuse, das an einer Seite mittels eines flexiblen Einsatzes wie einer Membran oder eines Elastomereinsatzes verschlossen ist, ist ein Dehnstoff eingefüllt, dessen Volumen bei Erwärmung stark zunimmt. Ein solcher Dehnstoff kann beispielsweise ein Wachs, Hartparafin oder ein Öl sein. Mit der Membran oder dem Elastomereinsatz gekoppelt ist ein Hubkolben, der axial relativ zum Gehäuse bewegt werden kann. Erwärmt sich nun der Dehnstoff, so nimmt sein Volumen stark zu. Diese Volumenzunahme führt dazu, dass die Membran oder der Elastomereinsatz verformt wird. Resultierend aus dieser Verformung wird der Hubkolben aus dem Gehäuse gedrückt, so dass aus dieser Bewegung eine Stellfunktion abgeleitet werden kann. Ein Dehnstoffarbeitselement ist also ein Hochdruck-Hydraulik-Stellaktor, dessen Funktionsprinzip auf einem Phasenwechsel beruht. Dieser Phasenwechsel ist kennzeichnend für solche Dehnstoffarbeitselemente, da der Phasenwechsel verantwortlich für die extreme Volumenänderung ist. Wachs beispielsweise zeigt eine Volumenvergrößerung bis zu 30 %. Andere Dehnstoffe zeigen vergleichbare Volumenänderungen.

Mit solchen Dehnstoffarbeitselementen sind beachtliche Hübe im Bereich mehrerer Millimeter bis in den Zentimeterbereich möglich, wie auch aufgrund der beachtlichen Volumenzunahme bei Erwärmung des Dehnstoffs und daraus resultierend den beachtlich hohen Drücken innerhalb des Gehäuses auch ein hoher Arbeitsdruck, mit dem der Hubkolben aus dem Gehäuse bewegt wird, erzeugt werden kann. Das heißt, dass über den Hubkolben auch eine hohe Stell- oder Arbeitskraft auf das zu stellende Bauteil, hier also beispielsweise ein benachbartes Abdeckelement oder ein Betätigungselement, das mit einem oder mehreren Abdeckelementen gekoppelt ist, übertragen werden kann.

Weiterhin ist erfindungsgemäß vorgesehen, dass dieses Dehnstoffarbeitselement mit der Bremsscheibe thermisch gekoppelt ist. Das heißt, dass das Dehnstoffarbeitselement in einem Fahrzeugradbereich angeordnet ist, in dem es im direkten oder indirekten thermischen Kontakt mit der Bremsscheibe angeordnet ist. Über diesen thermischen Kontakt ist eine hervorragende thermische Energieübertragung von dem thermisch extrem belasteten Bauteil, nämlich der Bremsscheibe, zum Stellelement, nämlich dem Dehnstoffarbeitselement, möglich. Ein solcher thermischer Energieübertrag lässt also eine sehr gute Erfassung eines etwaigen bremsscheibenseitigen Temperaturgradientens über das Dehnstoffarbeitselement zu, das folglich seine Temperatur mit nur geringer Zeitverzögerung entsprechend der Temperaturänderung der Bremsscheibe ebenfalls ändert. Mithin kann also infolge der thermischen Kopplung des Dehnstoffarbeitselements mit der Bremsscheibe sehr schnell und exakt erfasst werden, ob thermische Bedingungen gegeben sind, die folglich ein Öffnen der momentan geschlossenen Abdeckelemente, letztlich also der Felgendurchbrechungen, erfordern, um durch die Felge selbst eine Kühlung respektive einen Luftstrom zu ermöglichen.

Das erfindungsgemäße Fahrzeugrad lässt also einerseits eine hervorragende Erfassung der thermischen Gegebenheiten am zu kühlenden Bauteil, nämlich der Bremsscheibe, seitens des Dehnstoffarbeitselements zu, wie auch das Dehnstoffarbeitselement selbst sehr hohe Kräfte und beachtliche Hübe erzeugt, die zum Bewegen entweder eines einzelnen Abdeckelements oder, wenn über ein solches Dehnstoffarbeitselement mehrere Abdeckelemente simultan bewegt werden, mehrere Abdeckelemente von der Schließ- in die Offenstellung bewegt werden können.

Wie bereits beschrieben, kann entweder jedem separat bewegbaren Abdeckelement ein eigenes Dehnstoffarbeitselement zugeordnet sein. Das heißt, dass beispielsweise bei sechs vorgesehenen Abdeckelementen auch sechs zugeordnete Dehnstoffarbeitselemente vorgesehen sind. Alternativ ist es aber auch denkbar, dass die Abdeckelemente miteinander mechanisch bewegungsgekoppelt sind und über ein gemeinsames Dehnstoffarbeitselement (gegebenenfalls auch zwei oder drei) bewegbar sind. Bei dieser Erfindungsausgestaltung sind also weniger Dehnstoffarbeitselemente als Abdeckelemente vorgesehen, wenn möglich kann nur ein einziges Dehnstoffarbeitselement verbaut werden, das auf ein Bewegungsbauteil einwirkt, über das sämtliche Abdeckelemente mechanisch miteinander bewegungsgekoppelt sind. Durch die Stellfunktion des einen Dehnstoffarbeitselements werden folglich simultan alle Abdeckelemente bewegt. Die Kopplung kann z. B. mittels eines Zugmittels wie eines Stahlseils oder dergleichen realisiert sein.

Da die Temperatur an der Bremsscheibe selbst insbesondere bei Verwendung von Keramikbremsen sehr hoch sein kann, die Mindesttemperatur, ab welcher die Volumenänderung des Stellelements einsetzt respektive soweit fortgeschritten ist, dass es zum Ausüben der Stellfunktion kommt, jedoch deutlich darunter liegt, sieht eine besonders zweckmäßige Erfindungsausgestaltung vor, dass das oder die Dehnstoffarbeitselemente am Bremstopf befestigt sind. Dieser Bremstopf, der Träger der Bremsscheibe, steht in unmittelbarem thermischen Kontakt mit der Bremsscheibe selbst. Er erwärmt sich folglich, jedoch nicht so stark wie die Bremsscheibe selbst. Das heißt, dass die Temperatur am Bremstopf niedriger ist als die Scheibentemperatur. Werden nun das oder die Dehnstoffarbeitselemente am Bremstopf befestigt, so sind sie an einem Bauteil angeordnet, dessen Temperatur im Bereich des Phasenwechsels des Dehnstoffs, also beispielsweise des Wachses oder Parafins, liegt. Selbstverständlich vollzieht der Bremstopf die jeweiligen Temperaturgradienten der Bremsscheibe mit, infolge der unmittelbaren thermischen Kopplung folgt er dem Temperaturverlauf der Bremsscheibe sehr rasch, weshalb folglich auch die Arbeitselemente den Temperaturänderungen der Bremsscheibe rasch folgen und die Stellfunktion, sofern thermisch bedingt erforderlich, im engen zeitlichen Zusammenhang mit der entsprechenden auslösenden Bremsscheibentemperaturänderung erfolgen kann.

Um für einen guten thermischen Kontakt zwischen Dehnstoffarbeitselement und Bremstopf zu sorgen, sieht eine zweckmäßige Weiterbildung der Erfindung ferner vor, dass das oder die Dehnstoffarbeitselemente in jeweils eine am Bremstopf vorgesehene Aufnahme eingesetzt sind. Ein Dehnstoffarbeitselement weist üblicherweise ein zylindrisches, topfartiges Gehäuse auf, in dem der Dehnstoff angeordnet ist. Am Bremstopf ist zweckmäßigerweise eine von der Form her der Außenform des Gehäuses entsprechende Aufnahme, beispielsweise eine Sackbohrung, vorgesehen, in die das Gehäuse des Dehnstoffarbeitselements fest eingesetzt ist. Die Fixierung kann auf beliebige Weise erfolgen, beispielsweise durch Anschweißen, Anlöten oder Ähnliches, gegebenenfalls ist auch ein Verkleben mit einem thermisch leitfähigen Kleber denkbar, wenn dieser hinreichend thermisch stabil ist. In jedem Fall kann so ein großflächiger Kontakt zwischen Bremstopf und Dehnstoffarbeitselementgehäuse und darüber mit dem Dehnstoff selbst erreicht werden.

Die Hubrichtung des Dehnstoffarbeitselements, also die Längsrichtung, in welcher der Hubkolben aus dem Gehäuse ausfährt, kann letztlich beliebig sein und hängt davon ab, wie die Kopplung eines Dehnstoffarbeitselements zum Abdeckelement oder zu einer mehrere Abdeckelemente bewegungskoppelnden Mechanik eben ist. Besonders bevorzugt werden das oder die Dehnstoffarbeitselemente derart angeordnet, also bevorzugt am Bremstopf verbaut, dass die Hubrichtung des oder der Dehnstoffarbeitselemente in Richtung der Raddrehachse verläuft, wobei ein Dehnstoffarbeitselement bei thermisch bedingter Betätigung direkt oder über ein Zwischenelement gegen die Innenseite des Abdeckelements arbeitet. Da das Fahrzeugrad bezogen auf seine Drehachse einen axialen Aufbau hat, ist eine Anordnung des oder der Dehnstoffarbeitselemente mit ihren Hubrichtungen parallel zur Raddrehachse besonders einfach und zweckmäßig. Im Falle einer Integration am Bremstopf werden folglich die Sackbohrungen ebenfalls achsparallel gesetzt, so dass die Dehnstoffarbeitselemente automatisch richtig orientiert sind. Die erzeugte Kraft eines Dehnstoffarbeitselements wird also an der Innenseite eines plattenförmigen Abdeckelements aufgebracht bzw. wirkt auf einen mit dem Abdeckelement verbundenen Hebel oder Ähnliches, ein. Ein solches Zwischenelement, beispielsweise der beschriebene Hebel oder ein Verlängerungsstück etc., ermöglichen folglich, dass das Dehnstoffarbeitselement nicht unmittelbar am Abdeckelement angreifen muss. Wichtig ist jedoch grundsätzlich, dass die Stellkraft des Dehnstoffarbeitselements an der Innenseite des Abdeckelements her aufgebracht wird, um dieses um seine Schwenkachse aus der geschlossenen Stellung in die geöffnete Stellung zu bewegen.

Wie bereits beschrieben, ist es möglich, mehrere Abdeckelemente über eine mechanische Verbindung bewegungszukoppeln, so dass sie über beispielsweise nur ein einziges Dehnstoffarbeitselement simultan bewegt werden können. Bei dieser Erfindungsausgestaltung ist es durchaus denkbar, das oder die Dehnstoffarbeitselemente derart zu positionieren, dass die Hubrichtung des Hubkolbens in Richtung der Raddrehachse, unter einem Winkel ≠ 180° oder senkrecht zur Raddrehachse verläuft, wobei das oder die Dehnstoffarbeitselemente mit einem Abdeckelement über eine mechanische Verbindung bewegungsgekoppelt sind. Die Anordnung kann beispielsweise radial sein, wenn der Bremstopf relativ breit ist, die Verbindung zu einem Abdeckelement kann über eine mechanische Verbindung in Form eines Zugdrahts erfolgen, oder zu einem die Abdeckelemente bewegungskoppelnden Koppelelement wie einem zentralen Drehring oder dergleichen, der über eine bezüglich der Raddrehachse quasi beliebig gerichtete Hubrichtung eines Dehnstoffarbeitselements gedreht wird etc. Aber auch bei einzeln betätigten Abdeckelementen ist eine solche Anordnung der Dehnstoffarbeitselemente grundsätzlich möglich.

Nach einer zweckmäßigen Weiterbildung der Erfindung kann das oder können die Dehnstoffarbeitselemente zumindest teilweise von einem radial vorspringenden Ansatz an der Felge übergriffen sein. Dieser radiale Felgenansatz dient als Schutz für das oder die Dehnstoffarbeitselemente, er ist jedoch so ausgelegt, dass selbstverständlich der Hubkolben des oder der Dehnstoffarbeitselemente daran vorbei bewegt werden kann.

Der Einsatz eines oder mehrerer erfindungsgemäß vorgesehener Dehnstoffarbeitselemente in entsprechender thermischer Kopplung zur Bremsscheibe ist insbesondere bei Fahrzeugrädern zweckmäßig, bei denen jedes Abdeckelement längs der Schwenkachse gegen die Kraft eines Rückstellelements verschiebbar und mit der Felge über ein bei einer Verschiebebewegung zwangsführendes Koppelelement verbunden ist. Bei solchen Fahrzeugrädern ist jedes Abdeckelement in der Offenstellung, so lange sich das jeweilige Abdeckelement in der radial inneren Position befindet. Dreht das Fahrzeugrad hinreichend schnell, wirken auf die Abdeckelemente entsprechende Zentripetalkräfte, also Fliehkräfte, die dazu führen, dass die Abdeckelemente längs der Schwenkachse radial nach außen wandern, während welcher Längsbewegung einerseits ein Rückstellelement, also beispielsweise eine Schraubenfeder oder Ähnliches, unter Aufbau einer Rückstellkraft deformiert wird, andererseits aber auch die Schwenkbewegung um die Schwenkachse zwangsgeführt eingeleitet und durchgeführt wird, um die Abdeckelemente aus der Offenstellung in die Schließstellung zu bewegen. Hierzu ist ein zwangsführendes Koppelelements vorgesehen, beispielsweise in Form einer felgenseitig und abdeckelementseitig gelenkig gelagerten Koppelstange. Bei einer solchen Fahrzeugradausgestaltung ist zum Öffnen der Abdeckelemente bei Raddrehung infolge der herrschenden Fliehkräfte eine beachtlich hohe Kraft aufzubringen, da die Abdeckelemente entgegen der Fliehkraft quasi zurückgedrückt werden müssen, um über das Koppelelement zwangsgeführt wieder aufgeschwenkt zu werden. Mit besonderem Vorteil ist dies nun unter Einsatz eines solchen Dehnstoffarbeitselements in entsprechender Ankopplung an die Bremsscheibe möglich, da mit dem Dehnstoffarbeitselement ein hinreichend hoher Hub und hohe Stellkräfte erzeugt werden können.

Der Einsatz wird noch weiter dadurch verbessert, wenn das Koppelelement selbst eine integrierte Elastizität aufweist oder felgen- und/oder abdeckelementseitig gegen eine solche Elastizität bewegbar gelagert ist. Denn in diesen Fällen ist es nicht erforderlich, ein Abdeckelement entgegen der wirkenden Zentripetalkraft wieder radial nach innen zu bewegen, um es zu öffnen. Vielmehr kann es, seine Radiallage beibehaltend, durch die Stellfunktion des Dehnstoffarbeitselements geöffnet werden, nachdem das Koppelelement nicht starr bzw. nicht starr gelagert ist, sondern die Elastizität vorgesehen ist, die durch das Dehnstoffarbeitselement zu überdrücken ist. Die Zentripetalkraft ist hingegen nicht zu überdrücken, so dass zum Öffnen trotz hoher Rotationsgeschwindigkeiten und hohen Zentripetalkräften folglich nur relativ geringe Steilkräfte zu erzeugen sind.

Weitere Vorteile, Merkmale und Einzelheiten der Erfindung ergeben sich aus dem im Folgenden beschriebenen Ausführungsbeispiel sowie anhand der Zeichnungen. Dabei zeigen:

Fig. 1    eine Teilansicht eines erfindungsgemäßen Fahrzeugrades im Schnitt,

Fig. 2    eine perspektivische Teilansicht eines Fahrzeugrades aus Fig. 1 unter Darstellung der Bremsscheibe nebst Bremstopf und einem Teil der Felge,

Fig. 3    eine Prinzipdarstellung zur Erläuterung der Arbeitsweise eines Dehnstoffarbeitselements,

Fig. 4    ein erfindungsgemäßes Fahrzeugrad einer ersten Ausführungsform mit starrem Koppelelement, in der geöffneten Stellung in eine Teilansicht,

Fig. 5    das Fahrzeugrad aus Fig. 4 in Rotation und geschlossener Abdeckelementstellung,

Fig. 6    eine Teilansicht eines erfindungsgemäßen Fahrzeugsrads einer zweiten Ausführungsform mit elastischem Koppelelement in Rotation und geschlossener Abdeckelementstellung,

Fig. 7    das Fahrzeugrad aus Fig. 6 in Rotation mit geöffnetem Abdeckelement,

Fig. 8    eine dritte Ausführungsform eines erfindungsgemäßen Fahrzeugrads mit einem Koppelelement in Form eines Kugelgewindetriebs, in Rotation,

Fig. 9    das Fahrzeugrad aus Fig. 8 in Rotation und geöffneter Stellung,

Fig. 10   eine vierte erfindungsgemäße Ausführungsform eines Fahrzeugrads in einer Teilansicht in Rotation, und

Fig. 11   das Fahrzeug aus Fig. 10 in Rotation und geöffneter Abdeckelementstellung.

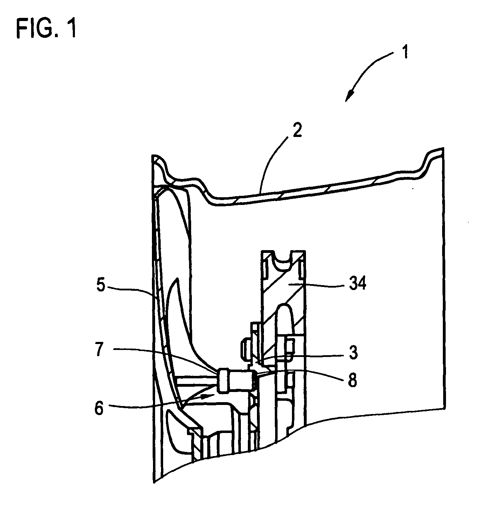

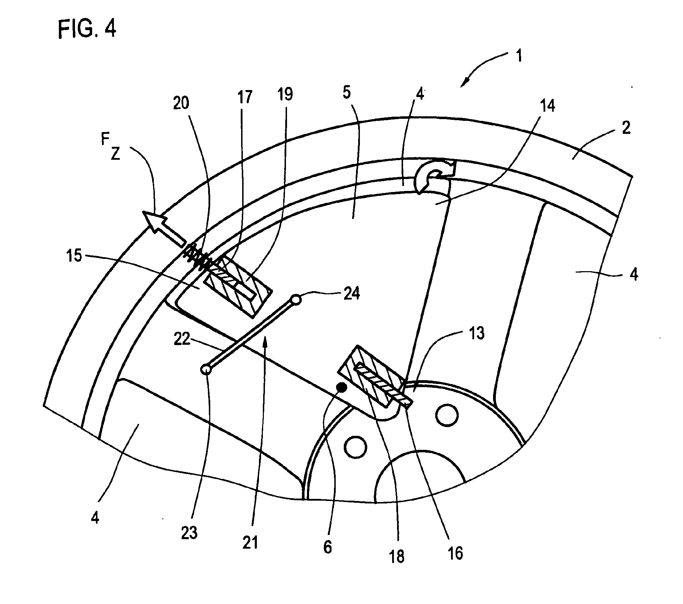

Fig. 1 zeigt ein erfindungsgemäßes Fahrzeugrad 1, umfassend eine Felge 2, einen an dieser befestigten Bremstopf 3 und eine an diesem befestigte Bremsscheibe 34. Die Felge 2 weist, siehe beispielsweise die Figuren 4 ff., diverse Durchbrechungen 4 auf, denen jeweils ein plattenförmiges Abdeckelement 5 zugeordnet ist, über das die Durchbrechungen geschlossen oder geöffnet werden können. Die jeweiligen Abdeckelemente 5 sind über eine Schwenkachse schwenkbeweglich an der Felge 2 gelagert, worauf nachfolgend noch eingegangen wird. Um sie dann, wenn es die thermischen Gegebenheiten an der Bremsscheibe 34 bedingen, in eine Offenstellung schwenken zu können, um eine Durchlüftung durch die felgenseitigen Durchbrechungen 4 zu ermöglichen, ist bei dem erfindungsgemäßen Fahrzeugrad ein thermisch gesteuertes Stellelement 6 in Form eines Dehnstoffarbeitselements 7 vorgesehen, das am Bremstopf 3 angeordnet ist und mithin in thermischer Kopplung zur Bremsscheibe 34 steht. Denn diese ist wie beschrieben direkt am Bremstopf 3 angeordnet, an dem wiederum direkt die Dehnstoffarbeitselemente 6, von denen bei dieser Erfindungsausgestaltung jeweils eines einer plattenförmigen Abdeckelement 5 zugeordnet ist, angeordnet sind.

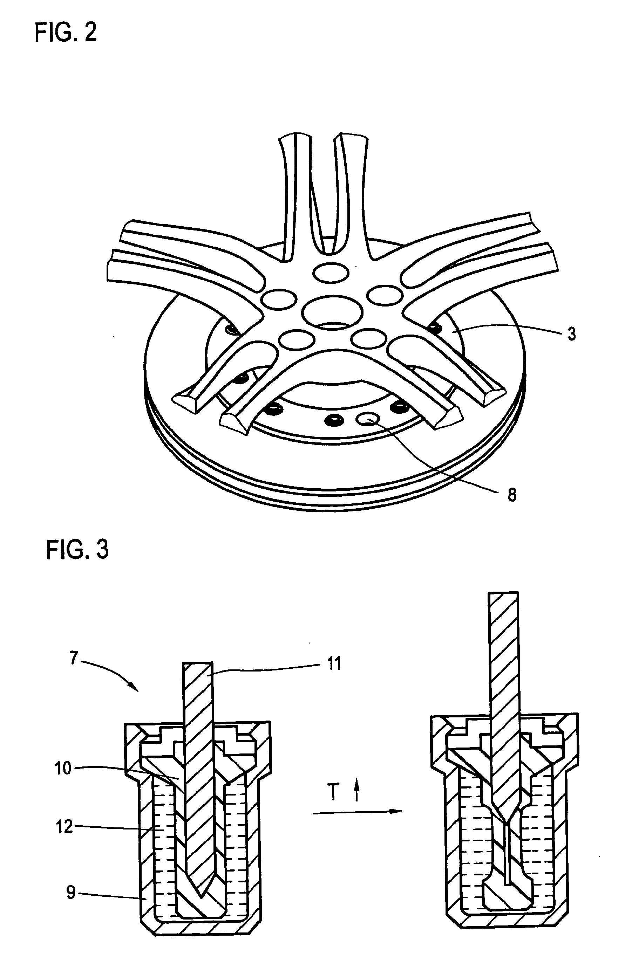

Hierzu sind, siehe Fig. 2, am Bremstopf 3 umfangsmäßig mehrere Aufnahmen 8 in Form von Sackbohrungen vorgesehen, in die jeweils ein Dehnstoffarbeitselement 7 eingesetzt ist. Durch das versenkte Anordnen der Dehnstoffarbeitselemente 7 erfolgt ein großflächiger Kontakt zum Bremstopf 3, so dass ein guter Wärmeübergang möglich ist.

Wie bereits beschrieben, wird als thermisch gesteuertes Stellelement bevorzugt ein Dehnstoffarbeitselement verwendet. Ein solches Dehnstoffarbeitselement ist in Fig. 3 gezeigt.

Ein Dehnstoffarbeitselement arbeitet nach dem sogenannten Dehnstoff-Hochdruck-Prinzip. Fig. 3 zeigt ein solches Dehnstoffarbeitselement 7, bestehend aus einem druckfesten Gehäuse 9, das an einer Seite offen ist. An dieser Seite ist ein flexiblen Einsatz 10 vorgesehen, der das Gehäuse dort schließt. Er erstreckt sich tief in das Innere des Gehäuses 9. In dem Einsatz 10, beispielsweise bestehend aus einer Membran oder einem Elastomer, also aus einem flexiblen Material, ist ein Hubkolben 11 geführt. Das Gehäuse 9 selbst ist mit einem Dehnstoff 12 gefüllt, beispielsweise einem Wachs, Hartparafin oder einem Öl. Dieses füllt den gesamten Raum zwischen Gehäuse 9 und flexiblem Einsatz 10 aus.

Beim Bremsen kommt es zu einer starken Erwärmung der Bremsscheibe 34, z.B. einer Keramikbremsscheibe. Infolge der thermischen Kopplung der Bremsscheibe 34 zum Bremstopf 3 und der weiteren thermischen Kopplung des Bremstopfs 3 zum Dehnstoffarbeitselement 7 erfährt folglich auch das Dehnstoffarbeitselement 7 einen entsprechenden Temperaturgradienten, ähnlich dem der Bremsscheibe 34. Erwärmt sich der Dehnstoff 12, so kommt es ab einer bestimmten Temperatur durch den Phasenübergang zu einer großen Volumenzunahme des Dehnstoffs, die dazu führt, dass der Hubkolben 11 aus dem Einsatz 10 und damit aus dem Gehäuse 9 herausgedrückt wird, wie in Fig. 3 gezeigt ist. Der Einsatz 10 schnürt sich, bedingt durch die Dehnstoffausdehnung, ein, worüber das Herausdrücken des Hubkolbens 11 bewerkstelligt wird. Mit dieser Hubbewegung kann das Dehnstoffarbeitselement 7 folglich seine Stellfunktion ausüben. Im Rahmen dieser drückt der Hubkolben, wie in den Ausführungsbeispielen nachfolgend noch näher beschrieben, mit hoher Kraft und großem Hub gegen die Innenseite eines Abdeckelements 5, worüber dieses verschwenkt wird.

Die Rückstellung erfolgt auf einfache Weise dadurch, dass sich der Dehnstoff 12 wieder abkühlt, mithin also sein Volumen wieder reduziert, woraufhin der Hubkolben 11, der ja üblicherweise eine rückstellende Gegenkraft erfährt, wieder in das Innere des flexiblen Einsatzes 10 gedrückt wird.

Die Bohrung 8 am Bremstopf 3 ist so bemessen und abgeordnet, dass das Gehäuse 9 darin sicher befestigt werden kann. Der Hubkolben 11 steht in Richtung der Innenseite des jeweils benachbarten Abdeckelements 5 vor.

Aufgrund der Anordnung des Dehnstoffarbeitselements 7 am Bremstopf 3 findet ein sehr schneller Wärmeübergang von der sich stark erhitzenden Bremsscheibe 34 auf das Dehnstoffarbeitselement 7 statt. Hierüber kann also sehr schnell und genau erfasst werden, wann die Bremsscheibe 34 eine Erwärmung erfährt, ab der eine zusätzliche Kühlung über eine Durchlüftung durch die Felge 2 hindurch erforderlich ist. Natürlich entspricht die Temperatur am Bremstopf 3 nicht der Temperatur an der Bremsscheibe 34, jedoch folgt infolge der sehr guten thermischen Kopplung zwischen Bremstopf 3 und Bremsscheibe 34 der Temperaturgradient am Bremstopf 3 sehr schnell dem Temperaturgradienten an der Bremsscheibe 34.

Fig. 4 zeigt eine Darstellung eines Teils eines Fahrzeugrads 1 nach einer ersten Ausführungsform, umfassend eine Felge 2, an der hier nicht näher gezeigt der Bremstopf 3 und an diesem die Bremsscheibe 34 befestigt sind. Die Felge 2 weist wie beschrieben mehrere der durch Lüftung und Optik dienende Durchbrechungen 4 auf, denen im gezeigten Beispiel jeweils ein plattenförmiges Abdeckelement 5 zugeordnet ist, wobei in Fig. 4 (dies gilt auch für alle folgenden Figuren) lediglich ein solches Abdeckelement 5 gezeigt ist. Dieses Abdeckelement 5 dient dazu, die jeweilige Durchbrechung 4 großflächig zu verschließen und bei Bedarf zur Durchlüftung zu öffnen.

Hierzu ist das Abdeckelement 5 um eine Schwenkachse 13 schwenkbeweglich. Bei der Darstellung gemäß Fig. 4 (dies gilt auch für alle Folgedarstellungen) handelt es sich um eine Innenseitenansicht der Felge 2. Die Schwenkbeweglichkeit eines jeden Abdeckelements 5 um die Schwenkachse 13 ist derart, dass jedes Abdeckelement 5 mit seiner in Fig. 4 gezeigten rechten äußeren Ecke 14 zum Felgeninneren, also aus der Zeichenebene zum Betrachter hin herausschwenkt. Die linke obere Ecke 15 hingegen schwenkt in die Zeichenebene, also vom Betrachter weg, zum Felgenäußeren. Dies ist in der in Fig. 4 gezeigten Offenstellung dargestellt, das heißt, dass hier das Abdeckelement 5 in einer geöffneten Position gezeigt ist, in welcher die rechte obere Ecke 14 nach innen, also zum Betrachter hin geschwenkt ist, während die linke obere Ecke 15 nach außen, vom Betrachter weg geschwenkt ist. Die Schwenklagerung ist hier über zwei Achsstifte 16, 17 realisiert, die längsbeweglich in entsprechenden Halterungen 18, 19, die an der Innenseite eines jeden Abdeckelements 5 angeordnet sind, aufgenommen sind. Beide Achsstifte 16, 17 sind lagefest an der Felge 2 in entsprechenden Aufnahmen fixiert.

Die radial außenliegende Halterung 19 ist gegen ein Federelement 20 gelagert, im gezeigten Beispiel eine Schraubenfeder. Dieses Federelement 20 dient dazu, eine Rückstellkraft auf das Abdeckelement 5 auszuüben, wenn dieses, worauf nachfolgend noch eingegangen wird, zentripetalkraftbedingt bei einer Raddrehung nach außen wandert.

Vorgesehen ist ferner ein Koppelelement 21, hier in Form einer Stange 22, die an der Felge 2 sowie am Abdeckelement 5 über jeweilige Kugelgelenklagerungen 23, 24 gelagert ist, das heißt sie ist über diese Kugellagerungen 23, 24 relativ zur Felge 2 bzw. dem Abdeckelement 5 beweglich aufgenommen.

Vorgesehen ist weiterhin das hier nur prinzipiell dargestelltes, thermisch gesteuertes Stellelement, bei dem es sich um ein zuvor beschriebenes Dehnstoffarbeitselement 7 handelt.

Fig. 4 zeigt das Fahrzeugrad 1 in der Ruhestellung bzw. bei sehr niedriger Drehzahl. Es wirkt keine bzw. eine sehr geringe Zentripetalkraft auf die Abdeckelemente 5, die sich noch in der geöffneten Stellung befinden.

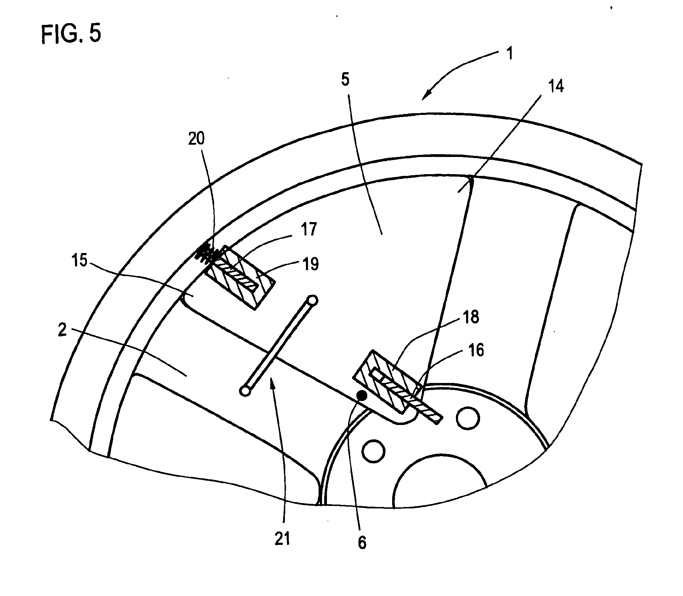

Dreht das Fahrzeugrad 1 schneller, fährt also das Kraftfahrzeug, an dem sich das jeweilige Rad befindet, schneller, so nimmt die wirkende Zentripetalkraft zu, wie in Fig. 4 mit $F_z$ dargestellt ist. Dies führt dazu, dass die einzelnen Abdeckelemente 5 längs der Schwenkachse 13 radial nach außen wandern, eine radiale Längsbewegung um wenige Millimeter bis Zentimeter ist konstruktionsbedingt gegeben. Bedingt durch die über das starre Koppelelement 21 realisierte Kopplung zwischen Felge 2 und Abdeckelement 5 kommt es während dieser radialen Längsbewegung dazu, dass der Längsbewegung überlagert eine Schwenkbewegung einsetzt, die das jeweilige Abdeckelement in die Schließstellung zwingt. Das Koppelelement 21 bewirkt also eine Zwangsbewegung von der Offen- in die Schließstellung. Ersichtlich, siehe Fig. 5, befindet sich das Abdeckelement radial gesehen etwas weiter außen, der innere Achsstift 16 ist etwas aus der Halterung 18 gewandert, der äußere Achsstift 17 liegt weiter innen in der Halterung 19. Das rechte Eck 14 und das linke Eck 15 sind in der jeweils eingeschwenkten, also in der Zeichenebene liegenden Position, die Durchbrechung 4 ist geschlossen. Infolge der Radialbewegung ist auch das Federelement 20 komprimiert, dieses übt eine Rückstellkraft auf das Abdeckelement 5 aus. Nimmt die Drehzahl wieder ab, so führt diese Rückstellkraft dazu, dass sich das jeweilige Abdeckelement 5 wieder öffnet, wenn über die Rückstellkraft die Zentripetalkraft $F_z$ wieder überdrückt werden kann.

Soll nun bei höherer Fahrgeschwindigkeit aufgrund der thermischen Gegebenheiten das jeweilige Abdeckelement 5 wieder geöffnet werden, so muss über das Dehnstoffarbeitselement 7 ein derart hoher Druck aufgebaut werden, dass infolge der starren Kopplung über das Koppelelement 21 eine der Zentripetalkraft $F_z$ entgegenwirkende Kraft ausgeübt wird, die das Abdeckelement 5 auf dem gleichen Bewegungs- und Schwenkweg zurückbewegt, so dass es die in Fig. 4 gezeigte Offenstellung einnimmt. Die Zentripetalkraft $F_z$ kann dabei beachtlich groß werden, abhängig von der Rotationsgeschwindigkeit, weshalb zwangsläufig über das Stellelement eine entsprechend hohe Gegenkraft zum Öffnen aufgebaut werden müsste. Dies ist mit einem Dehnstoffarbeitselement, verbunden mit einem erzeugten ausreichendem Kolbenhub, sicher zu bewerkstelligen.

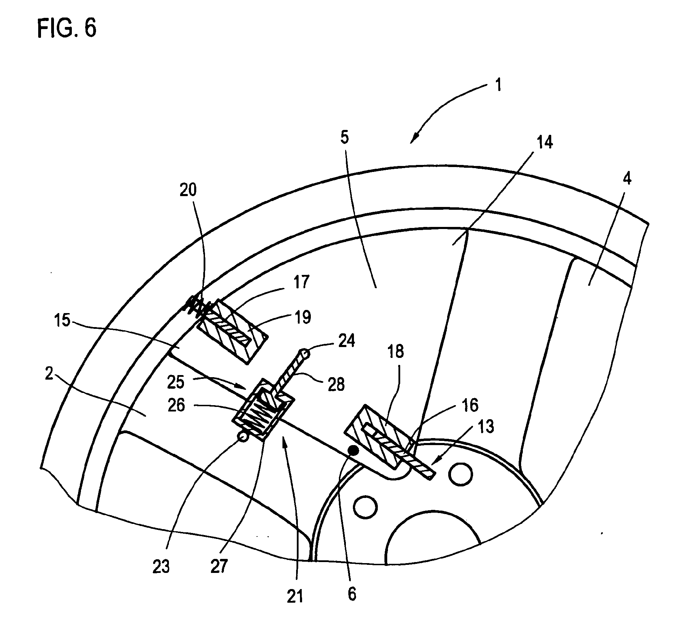

Fig. 6 zeigt ein weiteres erfindungsgemäßes Fahrzeugrad 1, wobei für gleiche Bauteile gleiche Bezugszeichen verwendet werden. Das Fahrzeugrad 1 umfasst ebenfalls eine Felge 2 mit diversen Durchbrechungen 4 sowie diesen jeweils zugeordnete Abdeckelemente 5. Diese sind wiederum um eine Schwenkachse 13 verschwenkbar, die Schwenkachse 13 ist über geeignete Achsstifte 16, 17 mit entsprechenden Halterungen 18, 19 am Abdeckelement 5 realisiert. Wiederum ist ein Federelement 20 vorgesehen, das beim radialen nach außen Wandern komprimiert wird und die Rückstellkraft, die zum Zurückführen bei hinreichend niedriger Drehzahl dient, aufbaut.

Vorgesehen ist wiederum ein Koppelelement 21, das hier jedoch eine integrierte Elastizität 25 aufweist, hier realisiert in Form eines Federelements 26, beispielsweise einer Schraubenfeder. Das Koppelelement 21 ist wiederum über zwei Kugelgelenklagerungen 23, 24 felgen- und abdeckelementseitig gelagert. Es besteht aus einem quasi zylinderartigen Elementbauteil 27, in dem das Federelement 26 angeordnet ist, sowie einem quasi kolbenartig darin geführten Elementbauteil 28.

Fig. 6 zeigt das Fahrzeugrad 1 in Rotation, die Rotationsgeschwindigkeit ist so groß, dass die Zentripetalkraft dazu führt, dass die Abdeckelemente 5 - wie bei der zuvor beschriebenen Ausführungsform - radial nach außen wandern und von der vormals geöffneten Stellung, in denen also die Ecken 14, 15 ausgeschwenkt sind, in die Schließstellung wandert. Die der radialen Längsbewegung überlagerte Schwenkbewegung wird auch hier über das insoweit steife Koppelelement 21 erzwungen, auch hier ist also eine Zwangskopplung realisiert.

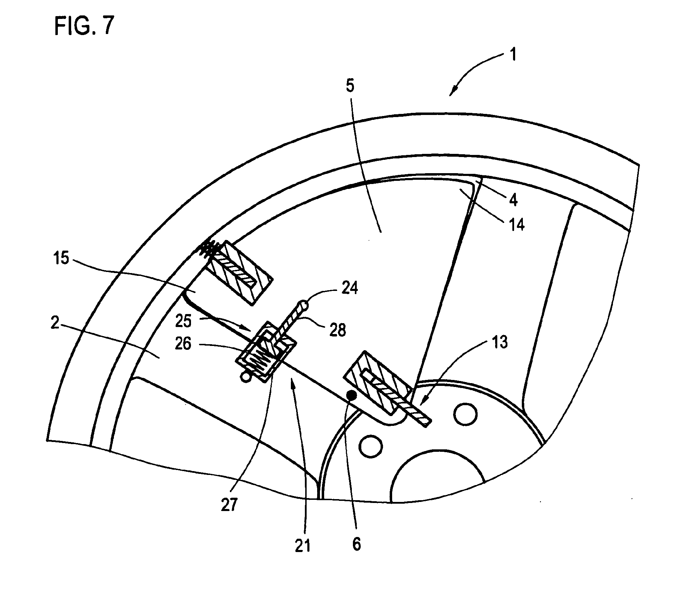

Soll nun jedoch aufgrund der insbesondere im Bereich der Bremse herrschenden Temperaturen die Durchbrechung 4 teilweise geöffnet werden, um einen Luftstrom durch die Felge zu ermöglichen, so wird auch hier mittels des Dehnstoffarbeitselements 7 infolge der Ausdehnung des Dehnstoffs der Hubkolben ausgefahren und gegen die Innenseite des Abdeckelements gedrückt, wobei aufgrund der integrierten Elastizität 25 nicht mehr eine derart hohe Kraft, die größer als die wirkende Zentripetalkraft ist, aufzubringen ist, sondern eine wesentlich geringere Kraft. Drückt der Hubkolben gegen die Innenseite des Abdeckelements 5, so schwenkt dieses um die Schwenkachse 13, während welcher Bewegung das Koppelelement 21 quasi gestaucht wird, siehe Fig. 7. Infolge der integrierten Elastizität 25, also der teleskopartigen, instabilen Ausführung des Koppelelements 21, ist es möglich, dieses mit relativ geringem Kraftaufwand zu deformieren, es muss lediglich der Widerstand, den die Elastizität 25 bildet, über das Dehnstoffarbeitselement 7 überdrückt werden. Das Abdeckelement 5 selbst behält seine radial ausgefahrene Stellung, es schwenkt lediglich um die Schwenkachse 13 unter gleichzeitiger Überdrückung respektive Deformation des Federelements 26. Die Position respektive Orientierung des Koppelelements 21 bleibt im Wesentlichen erhalten, da es sich lediglich verkürzt, jedoch keine Radialbewegung vornimmt. Ersichtlich wird das rechte Eck 14 aus der Zeichenebene zum Betrachter hin geschwenkt, während das linke Eck 15 in die Zeichenebene vom Betrachter weg geschwenkt wird. Der Druckpunkt, an dem das Dehnstoffarbeitselement 7 seine Kraft auf das Abdeckelement 5 einbringt, liegt - radial gesehen - in den jeweiligen Figuren links von der Schwenkachse 13. Da der Anbindungspunkt des Kugelgelenks 24 jedoch rechts, also auf der anderen Schwenkachsenseite liegt, kommt es infolge des Aufschwenkens aus der Seitenebene dieses rechts von der Schwenkachse 13 liegenden Abdeckelementabschnitts zur "Stauchung" des Koppelelements 21.

Sobald das Dehnstoffarbeitselement 7 den Druck reduziert, also entlastet, drückt die integrierte Elastizität 25, also das Federelement 26, das Elementbauteil 28 wieder aus dem Elementbauteil 27 heraus, das Koppelelement 21 längt sich wieder, worüber das Abdeckelement 5 wieder in die Schließstellung gedrückt wird, wie sie in Fig. 6 gezeigt ist. All dies geschieht während der Rotation des Fahrzeugrads 1, die wie daraus resultierend auch die Zentripetalkraft $F_z$ beliebig groß sein kann, da die Rotationsgeschwindigkeit und die Zentripetalkraft $F_z$ zur über das Dehnstoffarbeitselement 7 initiierten Öffnung des Abdeckelements 5 keine Rolle spielt.

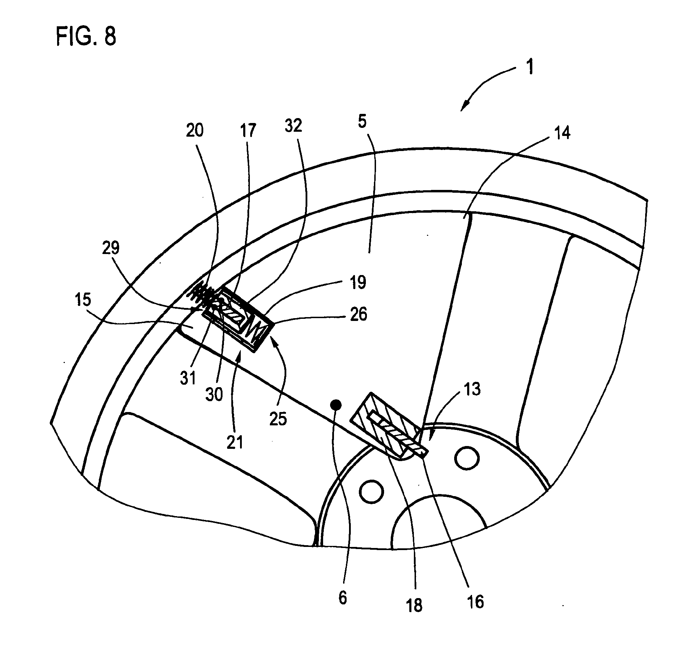

Fig. 8 zeigt eine weitere erfindungsgemäße Ausführungsform eines Fahrzeugrads 1 umfassend wiederum eine Felge 2 mit Durchbrechungen 4 sowie diesen jeweils zugeordneten Abdeckelementen 5, wobei auch hier wiederum nur ein Abdeckelement gezeigt ist. Dieses ist wiederum über eine Schwenkachse 13 gebildet durch die beiden Achsstifte 16, 17 und ihre jeweiligen Halterungen 18, 19 realisiert.

Vorgesehen ist auch hier ein Koppelelement 21, das hier jedoch anders ausgeführt ist als bezüglich der vorstehenden Figuren. Das Koppelelement 21 ist als Kugelgewindetrieb 29 ausgeführt. Der Achsstift 17 ist drehfest an der Felge 2 angeordnet. An ihm ist, nur exemplarisch gezeigt, ein Außengewinde 30 vorgesehen, in dem, wiederum nur exemplarisch gezeigt, Kugeln 31 laufen, die an einer Kugelhülse 32 vorgesehen sind. Die Kugelhülse 32, die quasi eine Art Mutter bildet, ist wiederum drehfest in der Halterung 19, die also eine Art Außenhülse darstellt, aufgenommen. In der Halterung 19 ist wiederum eine Elastizität 25 vorgesehen, hier in Form wiederum einer Schraubenfeder 26, gegen die die Hülse 32 gelagert ist.

In der Ruhestellung bzw. bei niedriger Geschwindigkeit liegen die Abdeckelemente 5 radial gesehen felgenseitig innen, sie sind aufgeschwenkt, die Ecken 14 und 15 sind folglich aus der Zeichenebene herausgeschwenkt.

Dreht nun das Fahrzeugrad schneller, so nimmt die Zentripetalkraft $F_z$ zu, was dazu führt, dass jedes Abdeckelement 5 längs der Schwenkachse 13 radial nach außen wandert, wie auch bei der Ausführungsform zuvor beschrieben. Infolge der drehfesten Anordnung des Achsstifts 17 und der Hülse 32 kommt es über die Kugelgewindetriebkopplung dazu, dass bei dieser radialen Längsbewegung über den Kugelgewindetrieb eine erzwungene Schwenkbewegung um die Schwenkachse 13 erfolgt, die dazu führt, dass die Abdeckelemente 5 in die Schließstellung schwenken. Diese Position ist in Fig. 8 dargestellt. Ersichtlich ist das gezeigte Abdeckelement 5 auf den Achsstiften 16, 17 nach außen gewandert. Das Federelement 12 ist komprimiert. Die Elastizität 25, also die Schraubenfeder 26, ist noch nicht beansprucht, da sie während dieser radialen Längs- und Schwenkbewegung nicht nennenswert beansprucht wird.

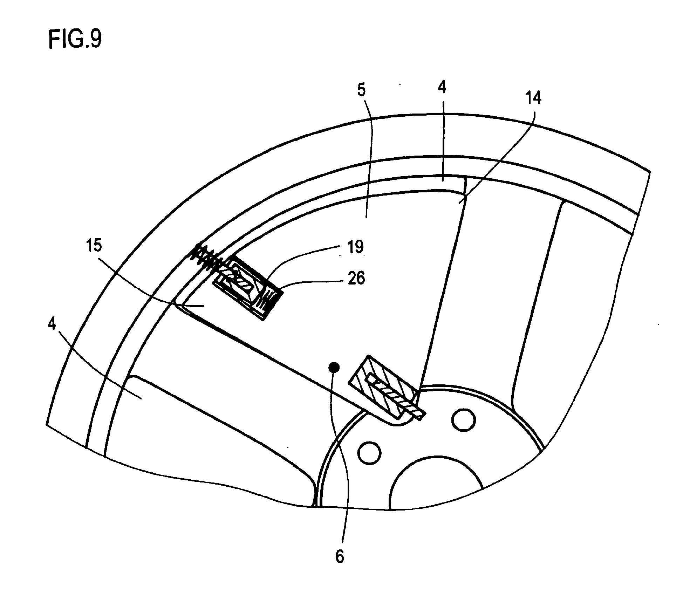

Soll nun über das auch hier vorgesehene Dehnstoffarbeitselement 7 bei hoher Drehzahl das jeweilige Abdeckelement 5 geöffnet werden, so drückt das Dehnstoffarbeitselement 7 wiederum auf die Innenseite des jeweiligen Abdeckelements 5. Infolge des Drucks kommt es nun dazu, dass die Hülse 32, die drehfest mit der Halterung 19 verbunden ist, die ihrerseits wiederum drehfest an dem Abdeckelement 5 angeordnet ist, um die Schwenkachse 13 gedreht wird, und zwar in einer Richtung entgegengesetzt zur Bewegungsrichtung während der Radialbewegung nach außen. Infolge der Kopplung der Hülse 32 mit dem drehfest an der Felge befindlichen Achsstift 17 über den Kugelgewindetrieb 29 kommt es nun dazu, dass die Hülse 32 etwas, nämlich drehwinkelabhängig, in das Innere das Aufnahme 19 wandert, dabei das Federelement 26, also die Elastizität komprimierend, wie in Fig. 9 dargestellt ist. Die radiale Lage des Abdeckelements 5 bleibt hierbei unverändert, da letztlich lediglich die Hülse 32 etwas längs der Schwenkachse wandert, diese Wanderbewegung wird jedoch, da die Hülse 32 zwar drehfest, jedoch axial beweglich in der Aufnahme 19 angeordnet ist, nur auf das Federelement 26, dieses komprimierend übertragen. Auch hier ist also letztlich wiederum nur das Federelement 26 zu überdrücken, der Widerstand, den der Kugelgewindetrieb 29 darstellt, ist demgegenüber vernachlässigbar. Das heißt, dass auch hier mit relativ geringer Kraft auch bei hoher Drehgeschwindigkeit das jeweilige Abdeckelement 5 geöffnet werden kann.

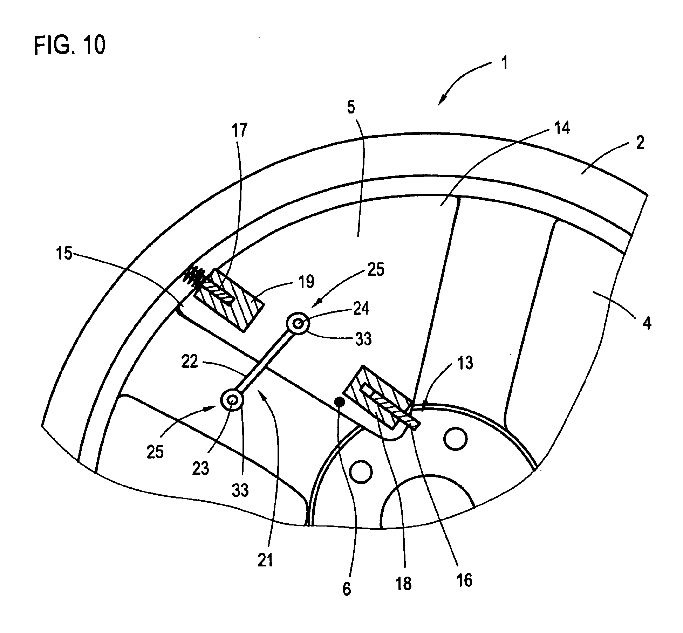

Fig. 10 zeigt eine weitere erfindungsgemäße Ausführungsform eines Fahrzeugrads 1, wiederum umfassend eine Felge 2 mit Durchbrechungen 4 und zugeordneten Abdeckelementen 5, die um eine Schwenkachse 13 gebildet über die bereits beschriebenen Achsstifte 16, 17 in ihren jeweiligen Halterungen 18, 19 schwenkgelagert sind.

Das Koppelelement 21 ist hier wiederum als starre Stange 22 ausgeführt, die hier einstückig ist, jedoch im Bereich ihrer Lagerungen 23, 24, die nicht zwingend als Kugelgelenklagerungen ausgeführt sein müssen, über entsprechende Elastizitäten 25 an der Felge 2 bzw. dem Abdeckelement 5 gelagert ist. Das heißt, dass hier die Elastizität nicht koppelelementseitig integriert ist, sondern in den Bereich der jeweiligen Lagerungen des Koppelelements 21 an der Felge 2 bzw. dem Abdeckelement 5 gesetzt ist. Die Elastizitäten 25 sind beispielsweise in Form von Gummi- oder Kunststoffringen 33 realisiert, die an entsprechenden Aufnahmen an der Felge 2 und am Abdeckelement 5 fixiert sind.

Fig. 10 zeigt das Fahrzeugrad 1 wieder in Rotation, die Abdeckelemente 5 sind radial nach außen gewandert, die in der Ruheposition ausgeschwenkten Abdeckelemente 5, in der sie die jeweilige Durchbrechung 3 teilweise öffnen, sind parallel zur radialen Auswärtsbewegung auch in die Schließstellung zwangsgeführt geschwenkt, die jeweiligen Ecken 14, 15 liegen also quasi in der Zeichenebene und schließen die jeweilige Durchbrechung.

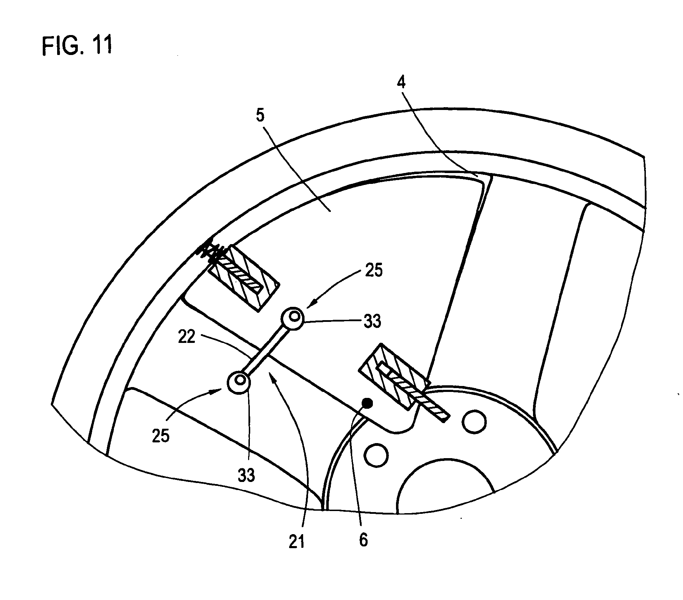

Soll nun über das jeweilige einem Abdeckelement 5 zugeordnete Dehnstoffarbeitselement 7 trotz hoher Rotationsgeschwindigkeit und damit hoher wirkender Zentripetalkraft das jeweilige Abdeckelement 5 wieder geöffnet werden, so wird über das Dehnstoffarbeitselement 7 wiederum ein Druck auf das Abdeckelement 5 ausgeübt. Dieser Druck führt dazu, dass das jeweilige Abdeckelement 5 eine Schwenkbewegung vollzieht, während welcher Schwenkbewegung, siehe Fig. 11, das starre Koppelelement 21 die zugeordneten Elastizitäten 25, also die Gummi- oder Kunststoffringe 33, deformiert. Diese bauen hierbei wiederum eine Rückstellkraft auf. Es kommt also zu der Ausschwenkbewegung, worüber die Durchbrechung 4 leicht geöffnet wird. Gleichzeitig ist auch bei dieser Erfindungsausgestaltung lediglich ein Überdrücken der Rückstellkraft der Gummi- oder Kunststoffringe 33 erforderlich, ein Arbeiten gegen die Zentripetalkraft ist auch hier nicht erforderlich.

## Patentansprüche

1.  Fahrzeugrad umfassend eine Felge (2), einen an dieser befestigten Bremstopf (3) und eine am Bremstopf (3) befestigte Bremsscheibe (34), wobei an der Felge (2) mehrere schwenkbar gelagerte, vorzugsweise plattenförmige Abdeckelemente (5) zum temporären Verschließen zugeordneter felgenseitiger Durchbrechungen (4) vorgesehen sind, die über wenigstens ein thermisch gesteuertes Stellelement (6) von einer Schließstellung in eine Offenstellung bringbar sind, **dadurch gekennzeichnet,** **dass** das Stellelement (6) ein Dehnstoffarbeitselement (7) ist, das zur Ermöglichung eines Wärmeübergangs von der Bremsscheibe (34) auf das Dehnstoffarbeitselement (7) mit der Bremsscheibe (34) thermisch gekoppelt ist.

2. Fahrzeugrad nach Anspruch 1, **dadurch gekennzeichnet,** **dass** das jedem separat bewegbaren Abdeckelement (5) ein eigenes Dehnstoffarbeitselement (7) zugeordnet ist, oder dass die Abdeckelemente (5) miteinander mechanisch bewegungsgekoppelt sind und überein gemeinsames Dehnstoffarbeitselement (7) bewegar sind.

3. Fahrzeugrad nach Anspruch 1 oder 2, **dadurch gekennzeichnet,** **dass** das oder die Dehnstoffarbeitselemente (7) am Bremstopf (3) befestigt sind.

4. Fahrzeugrad nach Anspruch 3, **dadurch gekennzeichnet,** **dass** das oder die Dehnstoffarbeitselemente (7) in jeweils eine am Bremstopf (3) vorgesehene Aufnahme (8) eingesetzt ist.

5. Fahrzeugrad nach Anspruch 4, **dadurch gekennzeichnet, dass** dass eine Aufnahme (8) als zylindrische Sackbohrung aufgeführt ist, in die das zylindrische Außengehäuse (9) eines Dehnstoffarbeitselements (7) eingesetzt ist.

6. Fahrzeugrad nach einem der vorangehenden Ansprüche, **dadurch gekennzeichnet,** **dass** die Hubrichtung des oder der Dehnstoffarbeitselemente (6) in Richtung der Raddrehachse verläuft, wobei ein Dehnstoffarbeitselement (7) bei thermisch bedingter Betätigung direkt oder über ein Zwischenelement gegen die Innenseite eines Abdeckelements (5) arbeitet.

7. Fahrzeugrad nach einem der Ansprüche 1 bis 5, **dadurch gekennzeichnet**, das die Hubrichtung des oder der Dehnstoffarbeitselemente (7) unter eine Winkel oder senkrecht zur Raddrehachse verläuft, wobei das oder die Dehnstoffarbeitselemente (7) mit einem Abdeckelement (5) über eine mechanische Verbindung bewegungsgekoppelt ist.

8. Fahrzeugrad nach einem der vorangehenden Ansprüche, **dadurch gekennzeichnet,** **dass** das oder die Dehnstoffarbeitselemente (7) zumindest teilweise von einem radial vorspringenden Ansatz an der Felge (2) übergriffen sind.

9. Fahrzeugrad nach einem der vorangehenden Ansprüche, **dadurch gekennzeichnet,** **dass** jedes Abdeckelement (5) längs der Schwenkachse gegen die Kraft eines Rückstellelements (20) verschiebbar und mit der Felge (2) über ein bei einer Verschiebebewegung zwangsführendes Koppelelement (21) verbunden ist.

10. Fahrzeugrad nach Anspruch 9, **dadurch gekennzeichnet,** **dass** das Koppelelement (21) eine felgenseitig und abdeckelementseitig gelenkig gelagert Koppelstange (22) ist oder eine Kulissen- oder Kugelgewindetriebführung aufweist.

## Claims

1. Vehicle wheel comprising a rim (2), a brake cover (3) attached thereto and a brake disc (34) attached to the brake cover (3), while on the rim (2) are provided a plurality of pivotably mounted, preferably plate-shaped cover elements (5) for temporarily sealing off associated perforations (4) on the rim side, said cover elements being adapted to be brought from a closed position into an open position by means of at least one thermally controlled servo element (6), **characterised in that** the servo element (6) is an expandable working element (7) which is thermally coupled to the brake disc (34) to allow a transfer of heat from the brake disc (34) to the expandable working element (7).

2. Vehicle wheel according to claim 1, **characterised in that** each separately movable cover element (5) has its own associated expandable working element (7), or the cover elements (5) are mechanically coupled for movement with one another and are movable by means of a common expandable working element (7).

3. Vehicle wheel according to claim 1 or 2, **characterised in that** the expandable working elements (7) are attached to the brake cover (3).

4. Vehicle wheel according to claim 3, **characterised in that** the expandable material element or elements (7) is or are each inserted in a receptacle (8) provided on the brake cover (3).

**5.** Vehicle wheel according to claim 4, **characterised in that** a receptacle (8) is embodied as a cylindrical blind hole into which the cylindrical outer housing (9) of an expandable working element (7) is inserted.

**6.** Vehicle wheel according to one of the preceding claims, **characterised in that** the stroke direction of the or each expandable working element (6) runs in the direction of the wheel rotation axis, while an expandable working element (7), when thermally actuated, operates directly or via an intermediate element against the inside of a cover element (5).

**7.** Vehicle wheel according to one of claims 1 to 5, **characterised in that** the stroke direction of the or each expandable working element (7) runs at an angle or perpendicularly to the wheel rotation axis, while the or each expandable working element (7) is coupled for movement with a cover element (5) by means of a mechanical connection.

**8.** Vehicle wheel according to one of the preceding claims, **characterised in that** the or each expandable working element (7) is at least partially overlapped by a radially projecting attachment on the rim (2).

**9.** Vehicle wheel according to one of the preceding claims, **characterised in that** each cover element (5) is movable along the pivot axis counter to the force of a restoring element (20) and is connected to the rim (2) by means of a coupling element (21) which provides forcible guidance during a shifting movement.

**10.** Vehicle wheel according to claim 9, **characterised in that** the coupling element (21) is a coupling rod (22) mounted in articulated manner on the rim and cover element or comprises a link- or ball-type threaded driving guide.

**Revendications**

**1.** Roue de véhicule comportant une jante (2), un pot de frein (3) fixé sur celle-ci et un disque de frein (34) fixé sur le pot de frein (3), étant prévus sur la jante (2) plusieurs éléments de recouvrement (5) de préférence en forme de plaque, logés de manière pivotante pour la fermeture temporaire de perçages (4) associés côté jante qui peuvent être amenés par au moins un élément de réglage commandé thermiquement (6) d'une position de fermeture à une position d'ouverture,
**caractérisée en ce**
**que** l'élément de réglage (6) est un élément de dilatation (7) qui est couplé thermiquement au disque de frein (34) pour permettre une transmission de chaleur du disque de frein (34) à l'élément de dilatation (7).

**2.** Roue de véhicule selon la revendication 1, **caractérisée en ce**
**qu'**un élément de dilatation (7) propre est associé à chaque élément de recouvrement (5) mobile séparément ou en ce que les éléments de recouvrement (5) sont couplés en déplacement mécaniquement entre eux et sont mobiles par le biais d'un élément de dilatation (7) commun.

**3.** Roue de véhicule selon la revendication 1 ou 2, **caractérisée en ce**
**que** le ou les éléments de dilatation (7) sont fixés sur le pot de frein (3).

**4.** Roue de véhicule selon la revendication 3, **caractérisée en ce**
**que** le ou les éléments de dilatation (7) sont respectivement insérés dans un logement (8) prévu sur le pot de frein (3).

**5.** Roue de véhicule selon la revendication 4, **caractérisée en ce**
**qu'**un logement (8) est réalisé comme un trou borgne cylindrique, dans lequel le boîtier extérieur (9) cylindrique d'un élément de dilatation (7) est inséré.

**6.** Roue de véhicule selon l'une quelconque des revendications précédentes, **caractérisée en ce**
**que** le sens de levage du ou des éléments de dilatation (6) s'étend vers l'axe de rotation de roue, un élément de dilatation (7) travaillant, en cas d'actionnement conditionné thermiquement, directement ou par un élément intermédiaire contre le côté intérieur d'un élément de recouvrement (5).

**7.** Roue de véhicule selon l'une quelconque des revendications 1 à 5, **caractérisée en ce**
**que** le sens de levage du ou des éléments de dilatation (7) s'étend sous un angle ou perpendiculairement à l'axe de rotation de roue, le ou les éléments de dilatation (7) étant couplés en déplacement avec un élément de recouvrement (5) par une liaison mécanique.

**8.** Roue de véhicule selon l'une quelconque des revendications précédentes, **caractérisée en ce**
**que** le ou les éléments de dilatation (7) sont recouverts au moins en partie par une saillie dépassant radialement sur la jante (2).

**9.** Roue de véhicule selon l'une quelconque des revendications précédentes, **caractérisée en ce que** chaque élément de recouvrement (5) est mobile le long de l'axe de pivotement contre la force d'un élément de rappel (20) et est relié à la jante (2) par un élément de couplage (21) de guidage forcé lors d'un mouvement coulissant.

**10.** Roue de véhicule selon la revendication 9, **caractérisée en ce que** l'élément de couplage (21) est une tige de couplage (22) logée de manière articulée côté jante et côté élément de recouvrement ou présente un guidage à coulisse ou vis d'entraînement à billes.

FIG. 1

FIG. 2

FIG. 3

FIG. 4

FIG. 5

EP 2 605 919 B1

FIG. 6

17

FIG. 7

FIG. 8

FIG.9

FIG. 10

FIG. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0145487 A2
- DE 3816415 A1
- EP 1319526 A2
- DE 102008007690 A1
- JP 61244601 A